# EUROPEAN PATENT APPLICATION

(11) **EP 3 905 060 A1**
(43) Date of publication of application: **03.11.2021**
(21) Application number: 21170365.7
(22) Date of filing: 26.04.2021
(51) Int. Cl.: G06F 16/24, G06F 16/71, G06F 16/78, G06F 16/242

(54) **ARTIFICIAL INTELLIGENCE FOR CONTENT DISCOVERY**

(30) Priority: 30.04.2020 EP 20172544
(71) Applicant: Mirriad Advertising PLC, London SE1 0BE (GB)
(72) Inventor: McLauchlan, Philip, London, SE1 0BE (GB); Prajapati, Niteen, London, SE1 0BE (GB); Harris, Tim, London, SE1 0BE (GB); Trimoldi, Filippo, London, SE1 0BE (GB); Koritskaya, Elena, London, SE1 0BE (GB); Blinov, Alex, London, SE1 0BE (GB)
(74) Representative: Horler, Philip John

(57) **Abstract**

The present disclosure relates to a video content discovery apparatus, system, method and computer program. In one aspect of the disclosure there is provided a video content discovery module configured to receive a content query, retrieve, from one or more information sources, text that relates to the content query, process the retrieved text, at least in part using Natural Language Processing, to transform the content query to a set comprising one or more video content descriptors, and identify one or more video segments of a plurality of available video segments, using the one or more video content descriptors.

## Description

### Technical Field

The present disclosure relates to a system, method, software and apparatus for processing content queries to retrieve relevant videos and video clips, and for training the system and apparatus thereof to enable improved content discovery.

### Background

With the advent of larger and larger video libraries, identification of relevant videos and video clips is becoming more difficult and time consuming. Currently, videos within a library are indexed based on content descriptors, which can be searched to identify relevant results. However, iterative search of large databases is extremely time consuming and generally returns a large number of videos containing irrelevant content.

There therefore exists a need for an improved method of identifying relevant videos held within a video library.

### Summary

In a first aspect of the present disclosure, there is provided a system comprising: a video content discovery module configured to: receive a content query; retrieve, from one or more information sources, a passage of text that relates to at least part of the content query; process the passage of text, using Natural Language Processing, to transform the content query to a set comprising one or more video content descriptors related to the content query; and identify one or more video segments of a plurality of available video segments using the one or more video content descriptors, wherein the identified one or more video segments are associated with at least one of the one or more video content descriptors (for example, the one or more video segments are identified by searching a database that comprises the plurality of available video segments to find video segments that are associated in the database with at least one of the one or more video content descriptors).

Each of the one or more video content descriptors may be a word that is identified by Natural Language Processing to be within a predetermined distance of the content query in the retrieved text.

The step of retrieving text that relates to the content query may further comprise: processing the content query to identify one or more search terms related to the content query; and retrieving text, from the one or more information sources, that includes at least one of the one or more identified search terms. In this case, each of the one or more video content descriptors may be a word that is identified by Natural Language Processing to be within a predetermined distance of the content query or one of the search terms in the retrieved text.

The content query may comprise an image, and wherein the system may be further configured to extract image metadata and/or image descriptors from the received image. In the implementation where the content query is processed to identify the one or more search terms, processing of the content query to identify the one or more search terms may comprise extracting image metadata and/or image descriptors from the received image.

The retrieved information may comprise the extracted image metadata and/or image descriptors, and wherein the video content descriptors are identified by using NLP on the retrieved information to transform at least part of the extracted image metadata and/or image descriptors.

The one or more information sources may comprise the Internet, and wherein optionally the relevant information is retrieved from the Internet by Web Scraping based on the identified search terms. Additionally or alternatively, the one or more information sources may comprise a local database, wherein relevant information is retrieved from the local database based on the identified search terms.

The video content descriptors may comprise one or more of: an object descriptor; an object lifetime descriptor; a face descriptor; a context descriptor; a semantic descriptor; a category descriptor; an emotion descriptor; a locale descriptor; a demographic descriptor; an action descriptor; a time-of-day descriptor; a season-of-the-year descriptor; and a weather descriptor.

Each of the one or more video content descriptors may be associated with a relevance score, indicating relevance in relation to the content query. Additionally, the identified video segments may be ranked based on the relevance score of the video content descriptors.

The system may further comprise a content database comprising a library of available video segments, wherein each video segment in the library of available video segments is associated with one or more video content descriptors.

The video content discovery module may identify the one or more video segments of the plurality of available video segments by matching at least one identified video content descriptor with a video content descriptor associated with a video segment in the library of available video segments.

The system may further comprise a mapping database comprising a mapping table which links each available video segment to one or more video content descriptors. Optionally, the mapping table may comprise a neural network defining links between each available video segment and a plurality of video content descriptors. Additionally or alternatively, the video content discovery module may identify the one or more video segments of the plurality of available video segments, by querying the mapping table with the at least one identified video content descriptor.

The content discovery module may be further configured to: identify or obtain a representative image for each of the one or more identified video segments; and output the representative image of each of the one or more identified video segments. The representative image may be selected based, at least in part, on relevance to the content query.

Optionally, the content discovery module may be further configured to: rank the one or more identified video segments based on a relevance score, the relevance score indicating the level of similarity of each identified video segment to the content query; and output the representative images in order of the rankings of their respective video segments.

The system may further comprise a mapping module configured to: receive a video segment; run a first process to identify one or more video segment descriptors related to the received video segment; and run a second process, based on the video segment descriptors, at least in part using Artificial Intelligence, to create a mapping table, wherein the mapping table links the received video segment to one or more video content descriptors, wherein the one or more video content descriptors are selected from a list of searchable video content descriptors.

The first process may comprise one or more of: an object detection algorithm; a face detection algorithm; a sentiment detection algorithm; a context detection algorithm; a semantic detection algorithm; a category detection algorithm; an emotion detection algorithm; a locale detection algorithm; a demographic detection algorithm; an action detection algorithm; a time-of-day detection algorithm; a season-of-the-year detection algorithm; and a weather detection algorithm.

The second process may comprise a Natural Language Processing algorithm.

The content query may comprise one or more negative associations, wherein the one or more negative associations restricts identification of any video segments, of the plurality of available video segments, related to the one or more negative associations.

The retrieved information related to the content query may comprise a record of relevant video content descriptors previously determined for a same or similar content query, and processing the retrieved information may further comprise extracting one or more video content descriptors from the retrieved record.

In a second aspect of the present disclosure, there is provided a system comprising a mapping module configured to: receive a video segment; run a first process to identify one or more video segment descriptors related to the received video segment; and run a second process, based on the video segment descriptors, at least in part using Artificial Intelligence, to create a mapping table, wherein the mapping table links the received video segment to one or more video content descriptors, wherein the one or more video content descriptors are selected from a list of searchable video content descriptors.

In a third aspect of the present disclosure, there is provided method of searching for video content, the method comprising receiving a content query; retrieving, from one or more information sources, information related to the content query, based on the content query; processing the retrieved information, at least in part using Artificial Intelligence, to identify one or more video content descriptors related to the content query; and identifying one or more video segments of a plurality of available video segments, using the one or more video content descriptors.

In a fourth aspect of the present disclosure, there is provided a computer program for carrying out the method of the third aspect when executed on the processor of an electronic device.

In a fifth aspect of the present disclosure, there is provided an electronic device comprising: a memory for storing the computer program of the fourth aspect; and a processor for executing the computer program of the fourth aspect.

In a sixth aspect of the present disclosure, there is provided a computer readable medium comprising instructions which, when executed by one or more hardware processors, causes performance of the method of the third aspect.

### Aspects of the disclosure

Non-limiting aspects of the disclosure are set out, but way of example only, in the following numbered clauses:
Clause 1. A system comprising:
   a video content discovery module configured to:
   receive a content query;
   retrieve, from one or more information sources, information related to the content query, based on the content query;
   process the retrieved information, at least in part using Natural Language Processing, to transform the content query to a set comprising one or more video content descriptors related to the content query; and
   identify one or more video segments of a plurality of available video segments, using the one or more video content descriptors.
Clause 2. The system of clause 1, wherein the step of retrieving information related to the content query further comprises:
   processing the content query to identify one or more search terms related to the content query; and
   retrieving information, from the one or more information sources, based on the one or more identified search terms, and optionally wherein the one or more information sources comprise the Internet, wherein relevant information is retrieved from the Internet by Web Scraping based on the identified search terms, and/or wherein the one or more information sources comprise a local database, wherein relevant information is retrieved from the local database based on the identified search terms.
Clause 3. The system of clause 2, wherein the content query comprises an image, and wherein processing of the content query to identify the one or more search terms comprises extracting image metadata and/or image descriptors from the received image, and optionally wherein the retrieved information comprises the extracted image metadata and/or image descriptors, and wherein the video content descriptors are identified by processing the extracting image metadata and/or image descriptors.
Clause 4. The system of any preceding clause, wherein the video content descriptors comprise one or more of:
   an object descriptor;
   an object lifetime descriptor;
   a face descriptor;
   a context descriptor;
   a semantic descriptor;
   a category descriptor;
   an emotion descriptor;
   a locale descriptor;
   a demographic descriptor;
   an action descriptor;
   a time-of-day descriptor;
   a season-of-the-year descriptor; and
   a weather descriptor.
Clause 5. The system of any preceding clause, wherein each of the one or more video content descriptors is associated with a relevance score, indicating relevance in relation to the content query, and optionally wherein the identified video segments are ranked based on the relevance score of the video content descriptors.
Clause 6. The system of any preceding clause, further comprising:
   a content database comprising a library of available video segments, wherein each video segment in the library of available video segments is associated with one or more video content descriptors, and optionally wherein the video content discovery module identifies the one or more video segments of the plurality of available video segments, by matching at least one identified video content descriptor with a video content descriptor associated with a video segment in the library of available video segments.
Clause 7. The system of any preceding clause, further comprising:
   a mapping database comprising a mapping table which links each available video segment to one or more video content descriptors, optionally wherein the mapping table comprises a neural network defining links between each available video segment and a plurality of video content descriptors, and optionally wherein the video content discovery module identifies the one or more video segments of the plurality of available video segments, by querying the mapping table with the at least one identified video content descriptor.
Clause 8. The system of any preceding clause, wherein the content discovery module is further configured to:
   identify or obtain a representative image for each of the one or more identified video segments; and
   output the representative image of each of the one or more identified video segments, and optionally wherein the representative image is selected based, at least in part, on relevance to the content query, and optionally wherein the content discovery module is further configured to:
      rank the one or more identified video segments based on a relevance score, the relevance score indicating the level of similarity of each identified video segment to the content query; and
      output the representative images in order of the rankings of their respective video segments.
Clause 9. The system of any preceding clause, further comprising:
   a mapping module configured to:
   receive a video segment;
   run a first process to identify one or more video segment descriptors related to the received video segment; and
   run a second process, based on the video segment descriptors, at least in part using Artificial Intelligence, to create a mapping table, wherein the mapping table links the received video segment to one or more video content descriptors, wherein the one or more video content descriptors are selected from a list of searchable video content descriptors, and optionally:
   wherein the first process comprises one or more of:
   an object detection algorithm;
   a face detection algorithm;
   a sentiment detection algorithm;
   a context detection algorithm;
   a semantic detection algorithm;
   a category detection algorithm;
   an emotion detection algorithm;
   a locale detection algorithm;
   a demographic detection algorithm;
   an action detection algorithm;
   a time-of-day detection algorithm;
   a season-of-the-year detection algorithm; and
   a weather detection algorithm,
   wherein the second process comprises a Natural Language Processing algorithm.
Clause 10. The system of any preceding clause, wherein the content query comprises one or more negative associations, wherein the one or more negative associations restricts identification of any video segments, of the plurality of available video segments, related to the one or more negative associations, and/or wherein the retrieved information related to the content query comprises a record of relevant video content descriptors previously determined for a same or similar content query,
   and wherein processing the retrieved information further comprises extracting one or more video content descriptors from the retrieved record.
Clause 11. A system comprising:
   a mapping module configured to:
   receive a video segment;
   run a first process to identify one or more video segment descriptors related to the received video segment; and
   run a second process, based on the video segment descriptors, at least in part using Artificial Intelligence, to create a mapping table, wherein the mapping table links the received video segment to one or more video content descriptors, wherein the one or more video content descriptors are selected from a list of searchable video content descriptors.
Clause 12. A method of searching for video content, the method comprising:
   receiving a content query;
   retrieving, from one or more information sources, information related to the content query, based on the content query;
   processing the retrieved information, at least in part using Artificial Intelligence, to identify one or more video content descriptors related to the content query; and
   identifying one or more video segments of a plurality of available video segments, using the one or more video content descriptors.
Clause 13. A computer program for carrying out the method of clause 12 when executed by one or more processors of an electronic device.
Clause 14. An electronic device comprising:
   a memory for storing the computer program of clause 13; and
   a processor for executing the computer program of clause 13.
Clause 15. A computer readable medium comprising instructions which, when executed by one or more hardware processors, causes performance of the method of clause 12.

### Drawings

Further features and advantages of the present disclosure will become apparent from the following description of an embodiment thereof, presented by way of example only, and by reference to the drawings, wherein like reference numerals refer to like parts, and wherein:
Figure 1 shows an example schematic representation of a system in accordance with an aspect of the present disclosure;
Figure 2 shows an example process executed by the system of Figure 1;
Figure 3 shows an example process executed by the system of Figure 1;
Figure 4 shows an example schematic representation of a system in accordance with an aspect of the present disclosure;
Figure 5 shows an example process executed by the system of Figure 4; and
Figure 6 shows an example electronic device in accordance with an aspect of the present disclosure.

### Detailed Description

The present disclosure relates to techniques for using artificial intelligence to index videos in a video library. The present disclosure also relates to techniques for identifying and retrieving videos held in a video content library.

In particular, the present disclosure relates to systems and methods for identifying video segments stored within a library of video segments. The present disclosure enables video segments relevant to a particular search query to be identified that would not be identified by prior art search methods.

The systems and methods described herein receive an initial query for content and use this query to retrieve additional related information, which can be processed to find additional, related, terms. These new related terms can be used to identify video segments held within the library that are related to the initial content query.

In addition, the library of video segments may be indexed in order to improve the speed of identifying video segments held in the library. The indexing may make use of computer vision processes to identify descriptors related to the video segments which can be associated with the video segments and later used to search the video library.

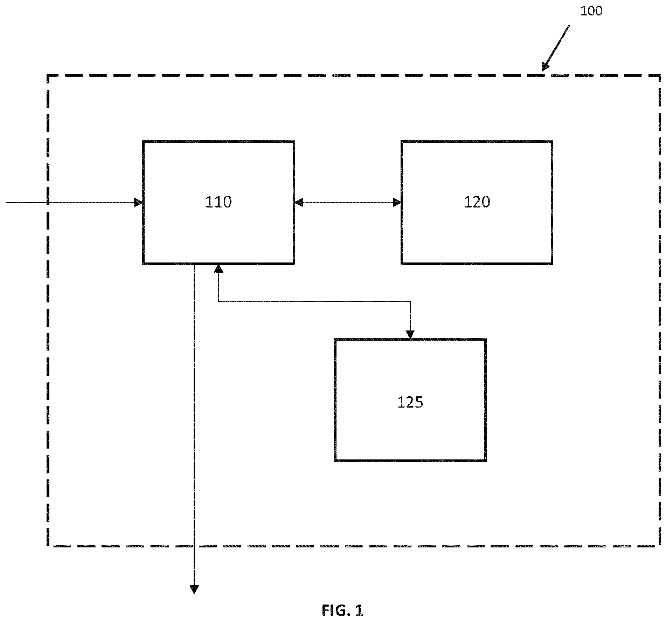

Figure 1 shows an example schematic representation of a system 100 in accordance with an aspect of the present disclosure. The system 100 comprises a video content discovery module 110 and information sources 120, 125. Whilst system 100 is shown with two information sources, the system may comprise any number of information sources as appropriate, such as one information source, or three or more information sources.

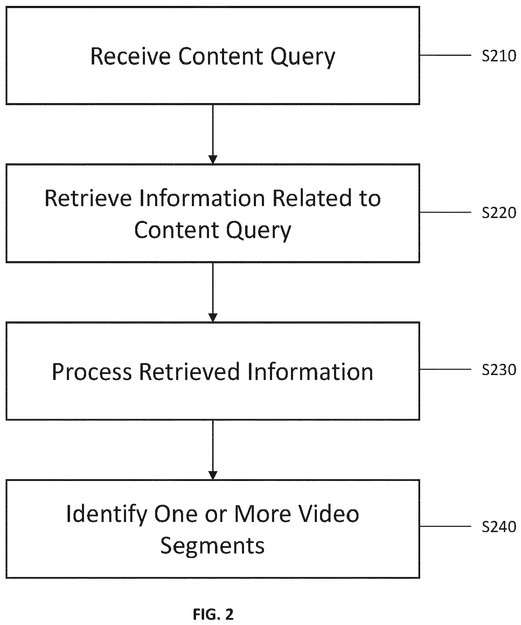

Figure 2 shows an example process executed by the system 100 for identifying at least one video segment of a plurality of available video segments, using one or more video content descriptors.

In step S210, the video content discovery module 110 receives a content query. The content query provides the initial search definition used by the system 100 in order to identify video content. In the simplest case, the content query may consist of a text query. For example, a user wishing to discover video content relating to cats may input a content query of *"cat".* Alternatively, or in addition, the content query may include search operators such as "OR", "AND", "NOT" (negative associations) "*" (wildcard), "()" (grouped terms), "related:", and so forth.

Alternatively, or in addition, the content query may include an image. When the content query comprises an image, the video content discovery module 100 may extract metadata and/or run image recognition techniques to define a suitable search definition for the object. For example, an image of a cat may comprise metadata such as image label of "cat". Similarly, the video content discovery module 100 may run an image recognition technique that returns a label of "cat".

Moreover, where the content query comprises an image it is not essential to run an object recognition or metadata extraction algorithm. Instead, the process may include the calculation of a descriptor vector for the image. This descriptor vector may be used to identify the closest video segment of available video segments, by distance to the associated video segment descriptors. For example, given an image of an actor, the query could return video segments with the actor. In this case the descriptor vector would be a face descriptor vector.

In step S220, the video content discovery module 110 retrieves, from one or more information source 120, 125, information related to the content query, based on the content query (for example, it may retrieve one or more passages of text that each include at least part of the content query). At this stage in the process, the video content discovery module 110 is not trying to directly identify video segments. Instead, the video content discovery module is searching for information from which relevant video content descriptors can be extracted (which will be explained in more detail below).

One information source 120 used by the system 100 may be the Internet. In this case, the video content discovery module retrieves data from the internet related to the content query. This data may comprise, for example, a webpage containing content (plain text, images, videos and the like) related to the content query. When processing a content query comprising the word "cat", the video content discovery module may retrieve one or more webpages indicated to be relevant to the search term by an Internet Search Engine.

Information may be retrieved from the Internet by using a tool, or process, that scrapes web content from the Internet. A web scraper is an Application Programming Interface (API) which extracts data from a web site. Many companies including Amazon AWS (RTM) and Google (RTM) provide suitable web scraping tools, services and public data available free of cost to end users.

Relevant information (such as a passage(s) of text) relating to the content query may be retrieved in step S220 by using a web scraping tool on social media webpages, such as Blogs, social networking websites and Twitter (RTM). Additionally, or alternatively, relevant information relating to the content query may be retrieved in step S220 by extracting information from a public news website (by searching for and extracting webpages containing at least part of the content query). Similarly, relevant information relating to the content query may be retrieved in step S220 by extracting information from public audio-visual content (such as music, television programmes or movies), scripts and/or audio description services (such as subtitles).

An additional, or alternative information source 125 used by the system 100 may be a private local or networked database. The private database may comprises pre-indexed information which enables quick retrieval of relevant information, based on prior information retrieval and processing performed by the system.

In step S230, the video content discovery module 110 processes the retrieved information to identify one or more video content descriptors related to the content query. This processing is performed, at least in part, using an Artificial Intelligence process. Any suitable Artificial Intelligence process which is capable of identifying video content descriptors from the retrieved information, based upon the initial content query. For simplicity, the following description will focus on the use of Natural Language Processing as an example Artificial Intelligence technique. However, the use of any other suitable Artificial Intelligence process is envisaged.

Natural Language Processing (hereinafter NLP) has been defined as *"A field of computer science, artificial intelligence concerned with the interactions between computers and human (natural) languages, and, in particular, concerned with programming computers to fruitfully process large natural language data".* The main measure used in Natural language processing is *"vector distance",* which is the distance that separates two particular objects, such as words. For example, the phrase *"nice fruit"* produces a high NLP correlation as the words *"nice"* and *"fruit"* are close together (in this case, next to each other). A longer phrase containing "nice" and "fruit" separated by many other words would have a much lower correlation. For example, in the phrase *"It is a nice day outside thought Jon, as he sat at his desk eating fruit", "nice"* does not refer to the *"fruit",* which would be reflected by a low NLP correlation. However, this longer phrase would produce a high NLP correlation between *"nice"* and *"day".*

Note that this vector distance can be used in a binary sense, for example by providing a binary indication as to whether the words *"nice"* and *"fruit"* have fewer than three words separating them. If there are fewer than three words, an association is made between the words. If there are more than three words, an association is not made. A separation of three words is given as an example, a larger or smaller number of separation words may be used, which in turn may change the strength of correlation indicated by the binary decision (a separation of one or two words indicating a stronger correlation, a separation of four or more words indicating a weaker correlation).

Alternatively, NLP may make use of a weighted association, where the weighted association reflects the strength of correlation. If the number of words between *"nice"* and *"fruit"* is two, then a stronger association may be made than if the number of words is five. A simple weighting mechanism may be used as a multiplier of the reciprocal of (the Number of words +1). This may give an associated weighting of 100% if the words were adjacent, 33% if there are two words between, and 20% if there were four words. Naturally other weightings, including non-linear weightings could be used.

Returning to step S230, the video content discovery module's 110 processing of the retrieved information by NLP produces a set of data comprising words associated with the content query, each having a corresponding level of association (either binary association or weighted association). For example, NLP may be used to identify one or more related terms that are within a minimum proximity, which as within one word, two words, three words, etc of at least part of the content query in the retrieved information (i.e., one or more related terms that are within a predetermined distance of the content query in the retrieved information). In this manner, the video content discovery module, has discovered a set of related terms to the original content query that would not otherwise have been obviously associated (for example, obvious misspellings or related spellings of the original content query may represent obvious associations, whereas the techniques disclosed herein identify one or more words that would not have been obvious associations).

Continuing the simple example of the content query "cat", at step S220, the video content discovery module 110 may have retrieved one or more webpages comprising, for example, a review of a recent motion picture called "Cats", a blogpost about a famous "cat" and a definition of a "cat" from an online dictionary site. At step S230, the video content discovery module 110 processes these three information sources with NLP to find terms that are highly correlated to the content query "cats". From this NLP process, a data set including the correlated terms *"new"* and *"movie"* (from a phrase in the review *"The new movie Cats..."),* the term *"Grumpy"* (from a blog post making repeated reference to a famous cat known as *"Grumpy Cat"*), and "fur" (from a dictionary definition of a cat) may be formed. In the present disclosure, these additional related terms discovered by the video content discovery module 110 in step S230 will be referred to as *"video content descriptors".*

At step S240, the video content discovery module 110 uses one or more of the video content descriptors to identify one or more relevant video segments from a plurality of available video segments. It is not necessary in step S240 to use the original content query in this identification process. Instead, advantageously, the system can use the video content descriptors to identify video segments based on the video content descriptors, to identify video segments that would not have been identified by a traditional search algorithm which uses only the original content query.

For example, using the *"cat"* example, video segments linked to one or more of the search terms *"new", "movie", "Grumpy"* and "fur" will be identified, thereby enabling relevant video segments to be identified by the system which would otherwise not have been identified had only the original content query been used.

As part of step S220, the video content discovery module 110 may optionally retrieve information from the one or more information sources based on related search terms. In this case, the video content discovery module performs the additional step of processing the received content query to identify one or more search terms related to the content query. For example, for the original content query "cat", the video content discovery module 110 may identify related search terms such as "cats" and "feline". The one or more of the additional search terms may then be used to retrieve additional information in S220 (optionally in addition to using the content query itself), for example retrieving a passage(s) of text that includes at least one of the one or more search terms. The process of S230 may then use NLP on the retrieved passage(s) of text to transform the search terms and/or content query to the set of one or more video content descriptors, in the same way as described above (for example, identify related terms that are within a predetermined distance of the content query or search terms in the retrieved information). This may lead to a larger data set of related terms being obtained in step S230, leading to the possibility of additional relevant video segments being identified in step S240.

In the present disclosure, the identification of *"video segments"* is described. A video segment may be, for example, a video, a part of a video (such as a scene) or any other division of a video.

Dependent on the amount of information that is retrieved and processed by the system 100, a very large data set of video content descriptors may be produced. Some video content descriptors may result in more relevant videos being identified and/or may be simpler to process by the system 100. Therefore, a further method is now described, which prioritises one or more of the video content descriptors.

Artificial Intelligence, for example Machine learning processes, may be used to preferentially identify video content descriptors from a list of preferred descriptors, in order to simplify the subsequent identification step. In this case, video content descriptors may only be identified or retained at step S230 if they appear on a list of allowable video content descriptors. Limiting the number of possible video content descriptors used by the system reduces the computational burden for identifying video segments.

The allowable video content descriptors may be selected to be relevant to the video segments available to the system. For example, if the majority of the available video segments relate to movies, the allowable video content descriptors may be picked to help distinguish between different movies, focusing on video content descriptors relating to categories, sentiment, actions, emotions, objects and so forth.

In the present disclosure, the video content descriptors identified in Step S230 and the allowable video content descriptors may comprise one or more of:
an object descriptor, indicative of what the content query relates to - "cat" relates to animal, "coca-cola" (RTM) relates to a beverage;
an object lifetime descriptor, indicative of an expected lifetime or persistence time of an object described in the content query;
a face descriptor, indicative of a face, type of face, or part of a face corresponding to the content query - *"ballerina"* relates to a female face;
a context descriptor, indicative of a context related to the content query - "beach" relates to hot and sunny, "funeral" relates to rainy and dark etc.;
a semantic descriptor, related to figurative and/or literal descriptors related to the content query;
a category descriptor, indicative of a category related to the content query - "Godfather" relates to film, TV, book, gangster etc.;
an emotion descriptor, indicative of an emotion related to the content query, "puppy" relates to happy and joy, "funeral" relates to sad;
a locale descriptor; indicative of a location related to the content query, such as a beach, a mountain or a geographical location etc.;
a demographic descriptor, indicative of a demographic associated with the content query;
an action descriptor, indicative of an action associated with the content query;
a time-of-day descriptor, indicative of a time-of-day associated with the content query;
a season-of-the-year descriptor, indicative of a season associated with the content query; and
a weather descriptor, indicative of a weather type associated with the content query.

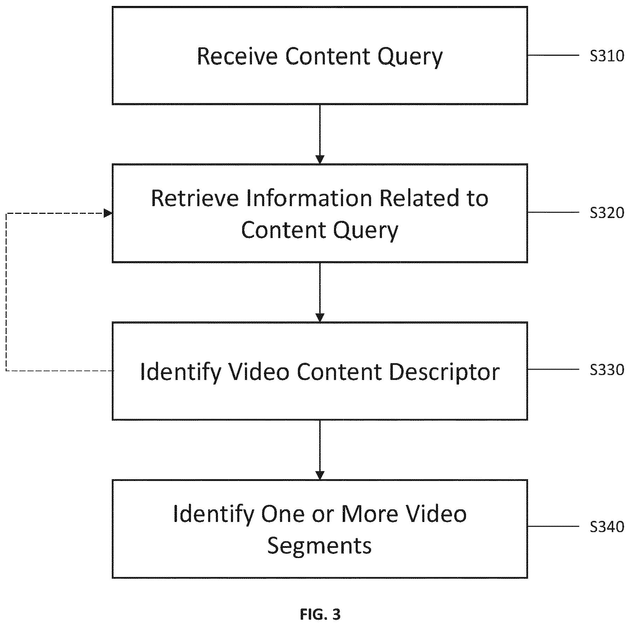

Figure 3 shows an example process executed by the system 100 for identifying at least one video segment of a plurality of available video segments, using one or more video content descriptors.

In step S310, the video content discovery module 110 receives a content query. The content query provides the initial parameter used by the system 100 in order to identify video content. In an example, this content query may be an image or a text query. When the content query comprises an image, an additional image recognition process may be run to extract an identity of the person (which could be used in place of a text query as set out in the previous example) and/or descriptors relating to the image. For example, an image of an unknown film star in a "beach scene" may result in descriptors being identified including "old" and "man" (person descriptors) "happy" (semantic descriptor) "beach" (location descriptor) and "sunny" (weather descriptor).

In step S320, the video content discovery module 110 retrieves, from one or more information sources 120, 125, information related to the content query (and/or search terms or descriptors that are identified based on the content query), based on the content query (and/or search terms or descriptors that are identified based on the content query). In this step, some or all of the content query and/or related search terms and/or related descriptors may be used to retrieve this information, singularly or in combination. In the example given above, "man, happy, beach" may be used to retrieve related news articles, blog posts, Wikipedia entries and the like.

In step S330, the video content discovery module 110 processes the retrieved information (in this case the news articles, blog posts, and/or Wikipedia entries, for example) to identify one or more video content descriptors, the identified video content descriptor(s) corresponding to an allowable video content descriptor on the list of allowable video content descriptors. This processing is performed, at least in part, using Artificial Intelligence.

The use of a list of allowable content descriptors can improve the efficiency of this method by enabling results obtained from the Artificial Intelligence process, which do not match an allowable content descriptor, to be excluded from further processing. Where an NLP process is run on a large amount of identified information, a huge number of relevant correlated terms may be identified. Matching these identified terms with a list of allowable terms greatly simplifies the computational processing that would otherwise be required to further process a large data set.

Returning to our simplified example, an NLP process run as part of step S330 on the term "beach" may return highly correlated video content descriptors such as "sand" and "coast". Where a relatively short list of allowable video content descriptors is being used, the terms "beach" and "coast" may not be included in the list, whereas the term "sand" may be included (as the term "sand" can be related to beach video segments and desert video segments - thereby representing a broader search term). Consequently, in this example, step S330 has identified an allowable video content descriptor ("sand") from the initial content query, enabling later identification of video content in the library associated with the descriptor "sand".

Optionally, if no allowable video content descriptors are identified in step S330, or if insufficient allowable video content descriptors are identified in step S330, the method may return to step S320 to retrieve additional information related to the content query for processing. This process may be repeated as necessary.

Whilst the identification of a single allowable video content descriptor will enable the identification of video segments from the content query, identifying more allowable video content descriptors can lead to an even greater number of video segments being identified in the next step. Therefore, optionally, the method may repeat steps S320 and S330 until a threshold number of allowable video content descriptors are identified. Whilst this threshold number may be 1, it may be any higher number.

In step S340, the video content discovery module 110 uses one or more of the allowable video content descriptors to identify one or more relevant video segments from a plurality of available video segments. In this step, the allowable video content descriptors, (such as "sand") may result in the identification of relevant video segments associated with the word sand. As would be understood, where further allowable video content descriptors have been identified (such as "actor" as a correlated allowable video content descriptor from "man"), the relevance of the identified video segments to the original search query may be improved (as this further example would return video segments associated with both "sand" and "actor").

In this simplified example, it may appear to be more efficient to directly compare the identified search descriptors with the allowable video content descriptors, avoiding the need to retrieve and process related information. However, doing so would miss out on the identification of video content descriptors that relate indirectly (i.e., relate via the retrieved information such as passages of text) to the content query. A key benefit to the methods described herein lies in being able to identify video content descriptors based on limited information (as additional relevant information is retrieved from, for example, the Internet).

Take as a further example an initial content query based on an unknown (to the system) new drink - such as a text query for *"Sprite Cola".* This initial content query has no evident link to this even being a drink, and so prior art systems would struggle to retrieve any relevant video segments. However, in accordance with the present disclosure, this content query could be used to perform an Internet search, which may retrieve both a proper definition (it is a drink) and a blog "review" (highlighting that it may be a sports drink liked by young people), enabling video content descriptors (such as "drink", "sports" and "active") to be identified and thereby relevant video content to be identified.

### Identification of Relevant Videos

In the above examples, the identified video segments may each be considered to be equally relevant. In this case, each identified video segment may be presented to a user, to enable the user to select and view identified video segments of their choosing.

To present identified video segments to a user, the systems and methods may be further adapted to identify or obtain a representative image for each of the one or more identified video segments. The representative image may be an image taken from the video segment, such as the first image, the last image or an image taken from any other part of the video segment. The representative image of each of the one or more identified video segments may then be output, by for example, being shown on a video display.

The representative image for each video segment may also be selected based, at least in part, on relevance to the original content query (and/or any identified search terms that are identified based on the content querys), as measured by relevance to the outcome of the Artificial Intelligence process. For example, video segments comprising more than one *"scene",* may have associated content descriptors which are more relevant to a particular scene in the video segment. Consequently, the representative image may be selected from a scene within the video segment that is most relevant to the video content descriptor(s) identified from the content query.

The systems and methods described herein may further seek to order the identified video segments such that identified videos with a higher relevance are shown before and/or more prominently than less relevant video segments.

In this case, the video content discovery module 110 may be further configured to rank the one or more identified video segments based on a relevance score. The relevance score indicating the level of similarity of each identified video segment to the content query. The identified video segment linked to the highest number of identified video content descriptors and/or the most relevant identified video content descriptors being considered the most relevant identified video segment. The relevance of an identified video content descriptor may be predetermined (by weighting video content descriptors in the list of available video content descriptors), or based on the strength of the correlation of a video content descriptor (for example as identified when using a weighted NLP algorithm).

Once a relevance score has been established for each identified video segment, the representative images may be presented to the user in order of the rankings of their respective video segments.

### Processing of Video Segments

The above described examples describe how video content descriptors may be obtained. In the following, example methods of identifying video segments, using these video content descriptors, are described.

Video segments of interest may be retrieved from a library of available video segments. The library of available video may be pre-indexed, such that each video is associated with video content descriptors. Methods for indexing videos within libraries are known in the art and any suitable method may be employed. Pre-indexing of videos results in each video in the library having metadata that may include a standardised label, which may comprise details including one or more of: the title; video length; one or more video content descriptors (describing aspects of the image content of the video) and/or any other relevant metadata.

Relevant video segments may be identified by iterative comparison of the determined video content descriptors with the video content descriptors associated with each video segment held in the library. Optionally, matching videos may then be sorted. This sorting may be based on the number of video content descriptors a given video has in common with the determined allowable video content descriptors. In this case, the higher the number of video content descriptors in common, the higher the ranking of the particular video segment. This concept is based on the idea that if a given video segment has a large number of video content descriptors in common with the video content descriptors identified based on the content query, the video is likely to be highly relevant. If the video segment has fewer descriptors in common, it is likely to be less relevant.

In addition, or as an alternative, when the strength of the correlation of a matched video content descriptor is available (for example when using a weighted NLP algorithm), the sorting of the identified video segments may take the correlation strength of matched video content descriptors into account. For example, a video segment having only a single matching video content descriptor, but one which is highly correlated to the search query, may be considered to be more relevant than a video segment with two matching video content descriptors with low correlation values. Any suitable weighted sorting method may be used.

The iterative comparison method can be improved by use of the allowable video content descriptors above. Limiting the number of the video content descriptors needing to be compared reduces the computational burden needed to process each video segment in the library.

To further improve the method, the video segments in the library may be re-indexed based on the allowable list of video content descriptors, so that in the identification of video segment step, only the allowable video content descriptors are considered. Optionally, this re-indexing may comprise the creation of a mapping table, by an Artificial Intelligence process. A system and method for performing this re-indexing will be further described below.

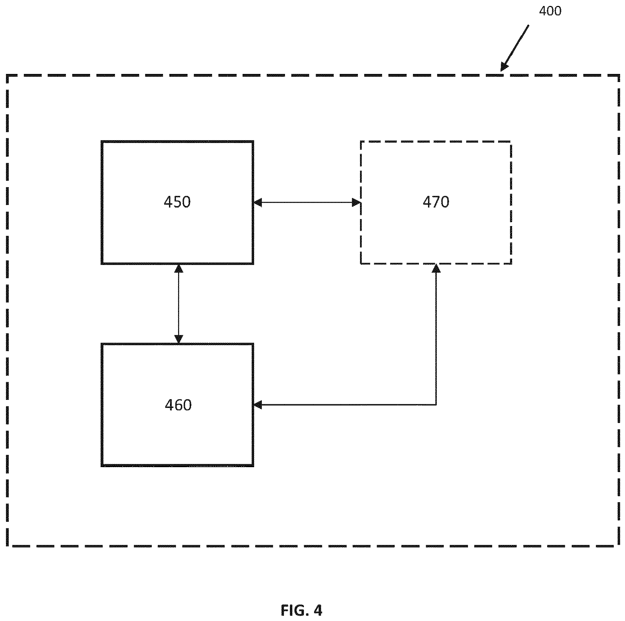

Figure 4 shows an example schematic representation of a system 400 in accordance with an aspect of the present disclosure. The system 400 comprises a mapping module 450 and a library of available video segments 460.

Optionally, the system 400 may further comprise a mapping database 470. The mapping database is optional as the library of available video segments 460 may be used to store all metadata related to the library of available video segments. When provided, the mapping database 470 may comprise a mapping table (not illustrated). The mapping table may also be stored in the library of available video segments 460.

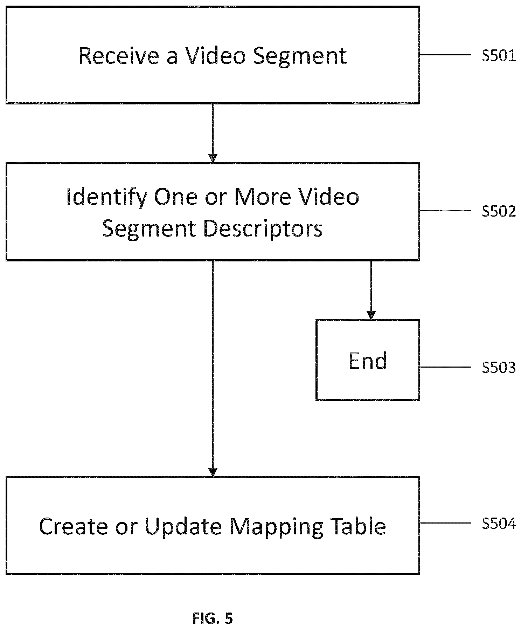

Figure 5 shows an example process executed by the system 400 for re-indexing at least one video segment of a plurality of available video segments.

At step S501, the mapping module 450 receives a video segment. In this step, the mapping module 450 may receive a new video from an external source, or may retrieve an available video from the library 460.

At step S502, the mapping module 450 may run a first process to identify one or more video segment descriptors related to the received video segment. The first process may be any suitable computer-implemented method of recognising objects and/or scenes within the video segment, from which video segment descriptors may be extracted.

For example, one or more computer vision process may be used to detect and identify one or more objects within a video segment automatically. Typical methods that can be used to produce a list of objects in a video segment include *"Fast-CNN"* (RTM), from Microsoft (RTM). There are many other similar tools for conversion of scenes into object lists. The identified objects themselves may be used as video segment descriptors, enabling video segments containing objects in common to be linked by a common video segment descriptor.

In addition, or as an alternative, it is possible in many cases to infer a location from an identified object. For example, a video segment containing a television and a chair may lead to a location of "lounge" being inferred. Similarly, a video segment containing a table and chair may instead lead to a "kitchen" or "dining room" to be inferred. These inferred locations may be used as video segment descriptors, enabling video segments having locations in common to be linked by a common video segment descriptor.

From further analysis of the video segment, other factors, such as sentiment may be inferred. Methods to analyse sentiment usually have require text found in, or inferred from a video segment to be input. One example method of inferring the sentiment of a video clip is the use of IBM's Watson (RTM). Sentiment analysis of a video segment may result in a video segment descriptor of "happy" or "sad" or the like.

A further example method of inferring the sentiment of a video segment is to use Amazon Web Services', AWS, (RTM) Sentiment Analysis tool (or a similar API). Which, based on analysis of a text description of a video segment and/or subtitles associated with the video segment (which can be extracted from the video content or automatically generated from video content using a further content recognition tool) and/or voice tones taken from the video segment, can assign sentiment descriptors to a video segment. An additional example of inferring the sentiment of a video segment is to analyse images within the video segment directly and predict a viewer's sentiment, optionally together with a prediction of a video segment character's emotions. In addition to video segment sentiment analysis, it is possible to directly analyse audio associated with the video segment to infer sentiment video segment descriptors from background music and noises.

In combination, these processes may result in each video segment being associated with one or more video segment descriptors, which enables later identification of relevant video segments within the library, based on the one or more video segment descriptors (for example, using the processes described above with reference to Figures 2 and 3). For example, a neural network trained on video content containing video segments with annotations having location descriptors (such as general descriptors like *"indoor"* or *"outdoor",* and/or more precise descriptors like *"park", "forest", "downtown",* or *"living room"*) can then later be used to identify video segments relevant to particular locations.

In the above example, the first process comprises one or more of object detection, location detection and sentiment detection. However, the first process may also comprise one or more of: a face detection algorithm, a context detection algorithm, a semantic detection algorithm, a category detection algorithm, an emotion detection algorithm, a demographic detection algorithm, a captioning recognition algorithm, a speech recognition algorithm, an action detection algorithm, a time-of-day detection algorithm, a season-of-the-year detection algorithm; and a weather detection algorithm.

Once processed, the video segment descriptors can be used with a traditional iterative search method to enable video segments within the library to be found. In addition, these video segment descriptors enable the library to be used with video content discovery systems and methods as described above in respect of Figures 1 to 4. Consequently, after step S502, the presently described method may end at step S503, once the received video segments have been processed as set out in step S502. The process may end at this step as the videos within the library have been indexed to enable them to be iteratively searched based on the associated video segment descriptors.

Alternatively, an additional processing step may occur. Following step S502, in step S504, a second process may be run to create a mapping table based on the video segment descriptors. The mapping table links each received video segment to one or more video content descriptors, wherein the one or more video content descriptors are selected from a list of searchable video content descriptors. The mapping table, once created, may be used to more quickly identify relevant video segments, without the need to iteratively check each video segment to see if it associated with a particular video content descriptor.

To create the mapping table, the second process may comprise, at least in part, an Artificial Intelligence process. The Artificial Intelligence process may comprise an NLP algorithm, used to correlate identified video segment descriptors with the one or more video content descriptors in the list of searchable video content descriptors. The Artificial Intelligence process may result in the formation of a Neural Network which serves as the mapping table.

For example, a mapping table may be built to learn the genre of video content, based on analysis of video segment descriptors linked to the video content. Where video content descriptors are used which describe emotion and/or context detected in video content, a genre for a given video segment can be predicted. For example, a murder mystery show might have "fear" and "distressed" emotion descriptors, together with *"police station"* as context. By contrast, a romantic show may have *"love"* and *"happy"* emotion descriptors, possibly in conjunction with "beach" or "restaurant" as context descriptors.

The mapping table may be created by using any standard tool or process which is suitable for linking video segments to a list of video content descriptors. In a simple example, where the list of video content descriptors consists solely of object descriptors (for example a list of 100 common objects such as *"chair", "table", "ball", "television"*)*,* the mapping table may be created by using an object recognition algorithm on each video segment to identify and then link each video segment with any of the 100 common objects contained therein. Once created, this mapping table enables relevant videos to be easily obtained by selecting one or more of the 100 common objects from the list of video content descriptors, which will lead to video segments including these objects to be identified.

In use, the list of video content descriptors is likely to contain video content descriptors from more than one category of descriptor (such as semantics, locations, weather and the like, as described above). Consequently, more than one tool or process may be used to create the mapping table. For example, in addition to the 100 common objects, the list of video content descriptors may also comprise a list of 20 semantic descriptors (such as *"happy"* and *"sad"*). Semantic descriptors may be inferred from a video segment by using any algorithm suitable algorithm such as those provided by Amazon Web Services (RTM). Additionally, or alternatively, some descriptors (such as semantic descriptors, or location descriptors, etc) may be inferred from other descriptors that have been identified using existing tools or algorithms (for example, a "living room" location descriptor may be inferred from identification of objects including a television, a sofa and a coffee table). In this further example, the mapping table enables video segments to be identified which include one or more object descriptors and one or more semantic descriptors (such as returning *"happy"* video segments containing a *"ball"* or *"sad"* video segments containing a *"table"* and a *"chair"*).

As more categories of video content descriptors are used in the list of video content descriptors, highly specific video segments can be identified. For example, in with a sufficiently large set of descriptors, it is possible to easily identify video segments with very specific criteria such as segments which are taken from a "film", contain a "cat", an additional "face", a "beach scene", which is "happy", the segment containing a "sun rise", in the "summer", albeit with "storm clouds".

The skilled person will readily appreciate that various alterations or modifications may be made to the above described aspects of the disclosure without departing from the scope of the disclosure.

The aspects of the disclosure described above may be implemented by software, hardware, or a combination of software and hardware. For example, the functionality of the video content discovery module 110 may be implemented by software comprising computer readable code, which when executed on one or more processors of any electronic device, performs the functionality described above. The software may be stored on any suitable computer readable medium, for example a non-transitory computer-readable medium, such as read-only memory, random access memory, CD-ROMs, DVDs, Blue-rays, magnetic tape, hard disk drives, solid state drives and optical drives. The computer-readable medium may be distributed over network-coupled computer systems so that the computer readable instructions are stored and executed in a distributed way. Alternatively, the functionality of the video content discovery module 110 may be implemented by an electronic device that is configured to perform that functionality, for example by virtue of programmable logic, such as an FPGA.

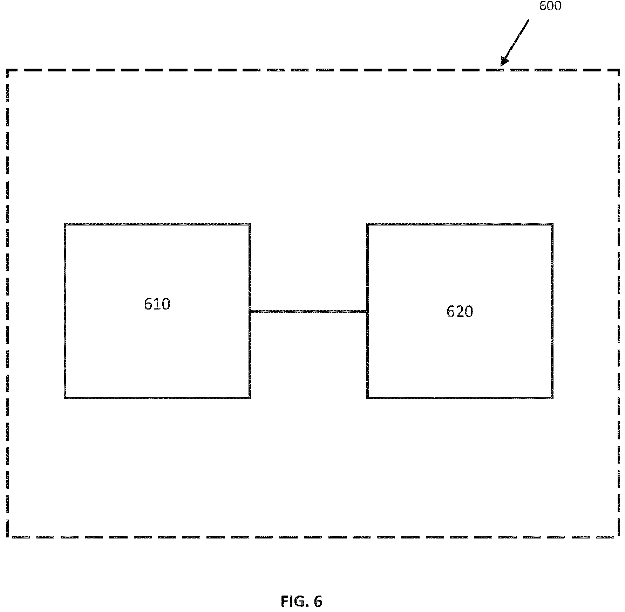

Figure 6 shows an example representation of an electronic device 600 comprising a computer readable medium 610, for example memory, comprising a computer program configured to perform the processes described above. The electronic device 600 also comprises a processor 620 for executing the computer readable code of the computer program. It will be appreciated that the electronic device 600 may optionally comprise any other suitable components/modules/units, such as one or more I/O terminals, one or more display devices, one or more further computer readable media, one or more further processors, etc.

## Claims

1. A system comprising:
a video content discovery module configured to:
receive a content query;
retrieve, from one or more information sources, text that relates to the content query;
process the retrieved text, at least in part using Natural Language Processing, to transform the content query to a set comprising one or more video content descriptors; and
identify one or more video segments of a plurality of available video segments, using the one or more video content descriptors.

2. The system of claim 1, wherein each of the one or more video content descriptors is a word that is identified by Natural Language Processing to be within a predetermined distance of the content query in the retrieved text.

3. The system of any preceding claim, wherein retrieving text that relates to the content query further comprises:
processing the content query to identify one or more search terms related to the content query; and
retrieving text, from the one or more information sources, that includes at least one of the one or more identified search terms.

4. The system of claim 3, wherein each of the one or more video content descriptors is a word that is identified by Natural Language Processing to be within a predetermined distance of the content query or one of the search terms in the retrieved text.

5. The system of any preceding claim, wherein the content query comprises an image, and wherein the system is further configured to extract image metadata and/or image descriptors from the received image.

6. The system of any preceding claim, wherein the one or more information sources comprise the Internet, wherein relevant information is retrieved from the Internet by Web Scraping based on the identified search terms.

7. The system of any preceding claim, wherein the video content descriptors comprise one or more of:
an object descriptor;
an object lifetime descriptor;
a face descriptor;
a context descriptor;
a semantic descriptor;
a category descriptor;
an emotion descriptor;
a locale descriptor;
a demographic descriptor;
an action descriptor;
a time-of-day descriptor;
a season-of-the-year descriptor; and
a weather descriptor.

8. The system of any preceding claim, wherein each of the one or more video content descriptors is associated with a relevance score, indicating relevance in relation to the content query.

9. The system of any preceding claim, further comprising:
a content database comprising a library of available video segments, wherein each video segment in the library of available video segments is associated with one or more video content descriptors.

10. The system of claim 9, wherein the video content discovery module identifies the one or more video segments of the plurality of available video segments, by matching at least one identified video content descriptor with a video content descriptor associated with a video segment in the library of available video segments.

11. The system of any preceding claim, further comprising:
a mapping module configured to:
receive a video segment;
run a first process to identify one or more video segment descriptors related to the received video segment; and
run a second process, based on the video segment descriptors, using Artificial Intelligence, to create a mapping table, wherein the mapping table links the received video segment to one or more video content descriptors, wherein the one or more video content descriptors are selected from a list of searchable video content descriptors.

12. The system of claim 11, wherein the first process comprises one or more of:
an object detection algorithm;
a face detection algorithm;
a sentiment detection algorithm;
a context detection algorithm;
a semantic detection algorithm;
a category detection algorithm;
an emotion detection algorithm;
a locale detection algorithm;
a demographic detection algorithm;
an action detection algorithm;
a time-of-day detection algorithm;
a season-of-the-year detection algorithm; and
a weather detection algorithm.

13. The system of any preceding claim, wherein the content query comprises one or more negative associations, wherein the one or more negative associations restricts identification of any video segments, of the plurality of available video segments, related to the one or more negative associations.

14. A method of searching for video content, the method comprising:
receiving a content query;
retrieving, from one or more information sources, text that relates to the content query ;
processing the retrieved text information, at least in part using Artificial Intelligence, to identify one or more video content descriptors related to the content query; and
identifying one or more video segments of a plurality of available video segments, using the one or more video content descriptors.

15. A non-transitory computer readable medium comprising instructions which, when executed by one or more hardware processors, causes performance of the method of claim 14.
